(19) Europäisches Patentamt
European Patent Office
Office européen des brevets

(11) Publication number: 0 371 641 A1

# (12) EUROPEAN PATENT APPLICATION

(21) Application number: 89311630.1

(22) Date of filing: 09.11.89

(51) Int. Cl.[5]: C08L 53/00, C08L 57/02, H02G 15/18

(30) Priority: 09.11.88 GB 8826250
08.02.89 GB 8902795

(43) Date of publication of application:
06.06.90 Bulletin 90/23

(84) Designated Contracting States:
ES

(71) Applicant: RAYCHEM LIMITED
Rolls House 7, Rolls Buildings Fetter Lane
London, EC4 1NL(GB)

(72) Inventor: Sutherland, Alistair Alfred Preston
37 Lychett Way
Nythe Swindon Wiltshire SN 3 3PL(GB)
Inventor: Hudson, John Michael
158 Oxford Road Stratton St Margaret
Swindon Wiltshire SN3 4HA(GB)
Inventor: Francis, Jane Valerie
St Mary's Four Acre Close Ashton Keynes
Swindon Wiltshire SN6 6PJ(GB)

(74) Representative: Jay, Anthony William et al
Raychem Limited Intellectual Property Law
Department Faraday Road Dorcan
Swindon, Wilts SN3 5HH(GB)

## (54) Gels.

(57) Gel compositions for demanding end use conditions comprising a styrene-alkylene-styrene block copolymer and at least 500 parts of extender liquid per 100 parts of the copolymer, wherein

(a) the copolymer has a molecular weight within a selected optimum range; and/or

(b) the extender liquid is a substantially non-aromatic paraffin/naphthene having a paraffin:naphthene ratio within a selected optimum range; and/or

(c) the composition additionally contains a poly(butene-isoprene) tackifier.

EP 0 371 641 A1

## GELS

This invention relates to a soft, high-temperature-slump-resistant, springy gel composition, by which is meant a liquid-extended polymer composition having a cone penetration value (measured by a modified version of ASTM D217, as described below) within the range from 100 to 400, (preferably 100 to 350), ($10^{-1}$ millimetres); an ultimate elongation (measured by ASTM D412 as described below) greater than 100%, with substantially elastic deformation (i.e. substantially no hysteresis) to an elongation of at least 100%; ultimate tensile strength (ASTM D412) less than 1 MegaPascal; dynamic storage modulus (as hereinafter described) less than 50000 Pascals; and substantially zero slump at temperatures up to 120°C, preferably 150°C, especially 180°C. The composition may either contain a three-dimensional network of cross-linked molecular chains (gels) or may merely behave as if it contained such a network (gelloids), both being included in the term "gels" as used hereinafter.

The invention is more particularly concerned with such gel compositions comprising at least 4% by weight of the gelling polymer and at least 5000 parts by weight of extender liquid per 100 parts by weight of the polymer in which the gelling polymer mainly (more than 50%, preferably more than 75%, more preferably more than 90%, and especially more than 95%, by weight, or substantially entirely, comprises a styrene-alkylene-styrene block copolymer having relatively hard polystyrene blocks and relatively elastomeric (preferably hydrogenated rubber) blocks. Examples of such copolymers include styrene-butadiene-styrene (SBS) and styrene-ethylene-butadiene-styrene (SEBS) triblock copolymers.

These soft, slump-resistant, springy, styrene copolymer gels with which the present invention is concerned, hereinafter referred to for brevity as "S-Gels", are well suited, inter alia, for re-enterable sealing of electrical connection enclosures, examples of which are hereinafter described.

The S-Gels thus defined as a class are clearly distinguished from known cable-filling gels such as those described in GB-A-2168991 and GB-A-2167764, which "resist drainage" only up to 70°C and are designed to be pourable (viscosity less than 1000 centiPoises) as the temperature approaches 120°C. Such cable-filling gels tend to have far too low a polymer content (e.g. 2% or less by weight) for the present purposes; or, when 4% or more of the polymer is used, must include in the extender a significant amount of polystyrene-compatible aromatic material which softens the polystyrene blocks of the gelling copolymer and so reduces the softening temperature of the gel.

Other known cable-filling materials, for example as described in GB-A-2021612, GB-A-2195642, US-4497538 and EP-A-0058022, use an additional material such as low molecular weight polyethylene which tends to render the material too hard at room temperatures for the present purposes, in addition to the lack of resistance to slumping at elevated temperature.

Also too hard are mixtures comprising 200 parts or less of the extender liquid per 100 parts of polymers, e.g. as in the hot melt adhesives described in U.S. Patents 4141876, 4104323, and 4042555. These mixture generally do not behave as gel or gelloid compositions, and tend also to have too high an ultimate tensile strength and dynamic storage modulus, especially when tackifying resins are added.

Gels for use as toys, shock absorbers, encapsulation of electrical components, accoustic isolation, and other uses are described by Chen in U.S. Patents 4369284 and 4618213 which specify the use of SEBS block copolymers having a ratio of styrene blocks to ethylene-butylene blocks within the range from 31:69 to 40:60. This is not, however, the preferred range of block ratios for the S-Gels of the present invention, and it has moreover been discovered that the block ratio is not the most significant factor in achieving optimum properties for the more demanding re-enterable sealing applications which can be performed by the slump resistant S-Gels of this invention.

When one or more of three major ingredients, viz. the copolymer, the extender, and a tackifier, are selected by the criteria of the present invention, the S-Gel can achieve the desired properties without the previously necessary use of cross-linking or a polystyrene-compatible additive to raise the softening temperature, which are described in EP-A-0224389 and WO-A-8800603 respectively for SEBS and other copolymers.

One aspect of the invention accordingly provides an S-Gel as hereinbefore defined comprising:-

(a) at least 4% by weight of a styrene-alkylene-styrene block copolymer in which the polystyrene blocks may be unsubstituted or may include on the benzene ring or vinyl moieties substitutents which raise the glass transition temperature of the gel compared with the equivalent gel having unsubstituted polystyrene blocks, the block copolymer having a weight average molecular weight (Mw) within the range from 195000 to 275000, preferably 215000 to 255000, more preferably 225000 to 245000, and

(b) at least 500 parts by weight of extender liquid per 100 parts by weight of the block copolymer, which liquid extends and softens the polyalkylene blocks of the said copolymer, the composition being

substantially free of polystyrene-compatible components which significantly raise or lower the softening temperature of the polystyrene blocks.

Preferably, the composition comprises 5 to 15 weight percent, more preferably 6 or 7 to 10 weight percent, of the block copolymer.

The composition may be "substantially free of" polystyrene-compatible components which significantly raise or lower the softening temperature (Ts) of the polystyrene blocks, either in the sense that substantially no such components are present, or in the sense that the quantities of such components which are present are not sufficient to produce a significant effect on the softening temperature. The use of such components significantly to raise the softening temperature (Ts) is claimed in the aforementioned WO-A-8800603. Lowering of Ts is generally undesirable for the present purposes, and the extender oil will therefore preferably be substantially non-aromatic, meaning that it contains less than 2%, more preferably less than 1%, and especially substantially zero, aromatic material.

It is found that copolymer molecular weights in the ranges according to the present invention result in reliably reproducible improvements in slump-resistance at elevated temperatures compared with similar polymers of lower molecular weight, while still achieving desirable "softness" and "springiness" (which may tend to diminish at molecular weights above the ranges specified). This is thought possibly to be due to the specified range of molecular weight striking an advantageous balance between softness, on the one hand, and limitation of freedom of the harder polystyrene block phase to move around in the relatively incompatible polyalkylene (rubber) softer block phase, but this theory is not to be regarded as definitive. Slumping usually occurs some tens of degrees above the onset of softening temperature Ts.

Despite such high molecular weights and high levels of extender liquid, the compositions of this invention remain substantially stable, homogeneous, and free from phase separation and exudation of extender, and various properties are improved while maintaining an adequate balance of other properties. The gel compositions when adhered to another surface, or to themselves, tend to be removable cleanly by adhesive release at the contact interface, substantially without any cohesive failure within the body of the gel composition.

Especially interesting block copolymers for the purposes of this invention are those wherein the copolymer comprises 29 to 35 weight percent, preferably 31 to 33 weight percent, of the polystyrene blocks. The polystyrene blocks preferably have a Mw within the range from 30000 to 40000, more preferably 33000 to 37000.

The block copolymer preferably comprises 71 to 65 weight percent, more preferably 69 to 67 weight percent, of the polyalkylene blocks, which blocks preferably have Mw within the range from 145000 to 165000, more preferably 150000 to 160000. The polyalkylene blocks preferably comprise substantially fully hydrogenated poly(ethylene-butylene) blocks, especially those comprising units of formula

$$-CH_2-CH_2-\underset{\displaystyle CH_2-CH_3}{\underset{|}{CH}}-CH_2-.$$

Cross-linking of the composition, although not essential, may be effected if desired as described in WO-A-8800603 and EP-A-0224389, and may produce further improvements in properties. Cross-linking however, tends to increase the hardness of the composition at room temperature, whereas the use of the additional polymer as claimed in WO-A-8800603 improves temperature performance without significantly increasing the hardness.

Within the specified range of properties for the gels and gelloids according to this invention, those having an ultimate elongation of at least 200% are preferred. Substantially elastic deformation up to an elongation of at least 200% is also preferred.

A second aspect of this invention provides an S-Gel as hereinbefore defined comprising:-

(a) at least 4% by weight of a styrene-alkylene-styrene block copolymer, and

(b) at least 500 parts by weight of extender liquid per 100 parts by weight of the block copolymer, which liquid extends and softens the polyalkylene blocks of the copolymer and comprises a substantially non-aromatic paraffin/naphthene mineral oil of paraffin/naphthene ratio within the range from 1.75:1 to 5:1, preferably 1.77:1 to 3:1, more preferably 1.9:1 to 2.3:1, and most preferably 2.0:1 to 2.2:1, this extender oil being preferred for all the gel compositions herein described, and the composition again being substantially free of the polystyrene-compatible components as aforesaid. These extender oils, especially at the higher paraffin: naphthene ratios, tend to produce gels with characteristics espcially well suited to the purposes of the aforementioned re-enterable enclosures.

Preferably, the oil has a refractive index according to ASTM D2140 within the range from 1.475 to 1.478, preferably 1.476 to 1.477. Preferably, the oil has a specific gravity at 20° C according to ASTM D2140 within the range from 0.863 to 0.870, preferably 0.864 to 0.869.

The extender liquids useful in the compositions of this invention comprising the block copolvmer may be selected from oils conventionally used to extend elastomeric materials. The oil may be a hydrocarbon oil such as paraf finic or naphthenic oils, synthetic oils such as polybutene or polypropene oils, and mixtures thereof. The preferred oils are mixtures of substantially non-aromatic paraffins and naphthenic hydrocarbon oils. The oils preferably have a minimum boiling point higher than the softening point of the block copolymer(s) and any additional polymer or copolymer.

The compositions of this invention are preferably prepared by mixing the oil with the block copolymer(s) at a temperature not less than the glass transition temperature of the hard blocks of the said block copolymer, as described generally in WO-A-8800603. Mastication or other mixing techniques at lower temperatures, perhaps with the aid of volatile solvents, may however be used if the resulting composition is acceptable for the intended end use.

A third aspect of this invention provides an S-Gel as hereinbefore defined comprising:-

(a) at least 4% by weight a styrene-alkylene-styrene block copolymer,

(b) at least 500 parts by weight of extender liquid per 100 parts by weight of the block copolymer, which liquid extends and softens the polyalkylene blocks of the copolymer,

(c) up to 600 parts by weight, preferably 150 to 400 parts by weight, more preferably 200 to 300 parts by weight, per 100 parts by weight of the block copolymer, of a poly(butene-isoprene) tackifier, preferably derived from units of formula $-CH_2-CH=CH-CH_2-$ and units of formula

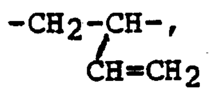

or predominantly comprising units of formula

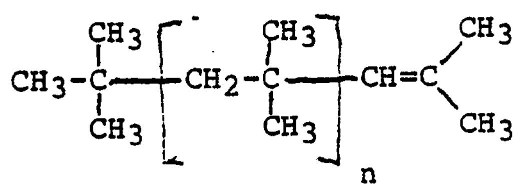

(the value of n depending, as usual, on the molecular weight) the parts by weight of the tackifier being preferably not more than the parts by weight of the extend liquid, and the composition again being substantially free of the polystyrene-compatible components as aforesaid.

These tackifiers are preferred for all gel compositions described herein. Preferably the tackifier has a number average molecular weight within the range from 1000 to 2000, preferably 1100 to 1700, more preferably 1200 to 1500. Preferably the tackifier has a viscosity at 100° C according to ASTM D445 within the range from 300 to 2000 $mm^2/s$, preferably 350 to 1500 $mm^2/s$, more preferably 400 to 1000 $mm^2/s$, especially 500 to 700 $mm^2/s$. Preferably the tackifier has a density at 15° C according to ASTM D-1298 within the range from 0.893 to 0.899, preferably 0.894 to 0.898. Preferably the tackifier has a refractive index N20/D according to ASTM D-1218 within the range from 1.499 to 1.503, preferably 1.500 to 1.502.

It may be noted that the combined use of the oils and tackifiers described herein, for example when the liquid tackifier replaces an equal weight of the extender oil in a given gel composition, tends to produce a gel composition with characteristics superior to those achievable by the use of the oil or tackifier alone, which gel may be especially suited to the requirements of the aforesaid re-enterable enclosures.

The compositions according to the various aspects of this invention can be made having a wide range of physical properties, such as cone penetration, ultimate elongation, and tear strength, to suit particular end use requirements. The preferred compositions having a cone penetration from about 100 to about 300 or 350 ($10^{-1}$ mm) (ASTM D217-82) and an ultimate elongation of at least 200% (ASTM D412) are particularly useful as sealing materials. The compositions preferably contain at least 1000, and preferably not more than 5000, parts by weight of extender liquid per 100 parts by weight of the block copolymer.

It may be useful to use various additives for various purposes in any of the compositions of this invention. Such additives may be stabilisers, antioxidants, flame retardants, tackifiers, corrosion inhibitors

and the like. It is useful to use antioxidants in all the compositions of this invention.

The compositions of this invention have numerous uses as elastomeric materials and in particular may be used as sealing materials, for example as illustrated in published European Patent applications 0108518 and 0191609, although the compositions of this invention will have many and varied uses depending on the properties desired and the temperatures to be encountered.

Gel or gelloid compositions within the scope of this invention are preferably defined by the criteria (1) to (8) derived from Tests I to V as described in WO-A-8800603, the disclosure of which is incorporated herein by reference, of which criteria preferably not more than one (not (1) or (2)) will be outside the specified ranges.

The preferred styrene-alkylene-styrene block copolymers for the present invention are selected from those styrene-ethylene-butylene-styrene triblock copolymers commercially available under the Trade Mark "Kraton G1651" from Shell. The presence of the required range of properties for optimised gel compositions according to the present invention is determined by the relevant methods. For example the molecular weight may be determined as follows.

The following conditions were used:
Solvent : HPLC grade THF.
Flow rate : 1.33 mls/min
Temperature : ambient.
Injection volume : 200 microlitres
Sample conc. : 0.2%
Internal std. : phenyl hexane
Detector : UV @ 254 nms followed by Differential Refractive Index detector
Columns : 2 off 60 cms Polymer Labs. mixed gel - 10 micron.
Computer : Trivector TriLab II G.P.C. with computer software using multi-straight line calibration.

The samples (100 mg) were accurately weighed and dissolved in 40 mls of THF in 50 ml volumetric flasks. 50 microlitres of marker were added when the polymer had dissolved, and the solutions up made to the 50ml mark. They were then filtered through a 0.2 micrometre pressure filter, and injected into the GPC. Three separate solutions of a polystryene standard of 76,000 Mol. Wt. were made up in volumetric glassware, and spiked with a known volume of marker.

The RI detector was positioned so that only 2" of microbore tubing were required to connect the two systems. The internal marker retention times between the detectors differed by less than the integrator time interval. Separate calibrations were made for each detector, using the same set of 10 polystyrene standards - these solutions were also marked. Peak areas were measured using the Trivector integrator package.

The marker was used both to correct for flow variations, and as an internal quantitative standard for the UV determination of styrene content.

Preferred extender oils include, for example, those available from Fina Chemicals under the Trade Marks "Fina Vestan" in grades A360B (preferred), "Drakeol 34" from Penreco, and "Witco 380PO" from Witco.

Preferred tackifiers include, for example, that available under the Trade Mark "Indopol H300" from Amoco Chemicals, "Hyvis 30" (Trade Mark) from British Petroleum Corp, "Wingtack 10" (Trade Mark) from Goodyear, and LIR290 (Trade Mark) from Seber Hegner.

Typical examples of the preferred gel compsitions are as follows:-

| | A | B | C |
|---|---|---|---|
| Kraton G1651 | 7% | 8.5% | 10% |
| Fina A360B | 71% | 69.5% | 68% |
| Indopol H300 | 20% | 20 % | 20% |
| Stabiliser Package* | 2% | 2 % | 2% |
| The 2% Stabiliser Package consisted of | | | |

* Irganox 1010 sacrificial antioxidant (0.25%)
* Irganox 1076 long-term antioxidant (0.75%)
* Tinuvin 327 U.V. stablisier (0.5%)
* Tinuvin 765 U.V. stabiliser (0.5%)
* (Trade Mark: all from CIBA-Geigy)

Oil-soluble dyes which are thermally stable, or carbon black can be added at low levels (0.5 - 2.5%) to colour the gels if desired.

One practical application of the gel compositions will now be described by way of example, with reference to the accompanying drawings, wherein:-

Figure 1 shows a simplified perspective view of a known telecommunication wire junction box;

Figure 2 shows in perspective from below, a Raychem "Termseal" (Registered Trade Mark) gel-containing insert for the junction box of Figure 1;

Figure 3 shows a plan view from above of the insert of Figure 2;

Figure 4 shows a cross-section through the inseert on the line 4-4 of Figure 3;

Figure 5 shows a side elevation of the junction box with the insert positioned for insertion therein; and

Figure 6 shows the final assembly of the junction box with the insert partly cut away to reveal the position of the gel within.

Referring to the drawings, Figure 1 shows the known junction box having a plastics body 10 and a plastics lid 20 hinged for closure onto the body. The body 10 has an upstanding end wall 30 at one end, and at the other end has an upstanding bulkhead assembly comprising upstanding end wall portions 40 with flanged rubber diaphragms 42 inserted in the gaps between the end wall portions 40.

A plastics terminal block 50 is removably attached inside the body 10 by screws (not shown). Four rows of raised terminals 52 are formed integrally with the block 50, each terminal having threaded screw 54 for securing the ends of electrical wires. Paired subscriber wires 60 are shown attached to various pairs of terminals 52 and passing through the diaphragms 42 to the exterior of the body. A multi-pair cable 70 is shown entering the body 10 through one of the diaphragms 42, various pairs of wires in cable 70 being connected electrically to the appropriate terminal screws 54 by means not shown on the concealed underside of the terminal block 50.

Thus, the pairs of the fine gauge wires in cable 70 leading from the telephone exchange are connected to the appropriate paris of subscriber wires 60, leading out of the junction box to the subscriber's telephone instrument. The lid 20 is then usually being mounted on a pole in the open air.

Unfortunately, even in this closed junction box, the terminal screws 54 are subject to corrosion and contamination, especially in hot, humid climates. This can lead to electrical failures and/or can make re-wiring or addition of new subscriber connections difficult or impossible.

The "Termseal" insert shown in Figures 2 to 4 is used to protect the terminals from such corrosion and contamination. The insert comprises a moulded plastic shell 100, partly filled with the improved gel composition of the present invention in the form of a block 110, which retains itself in the shell by adhesive forces. The shell 100 has a flange portion of 120, three sloping enlargements 130 providing greater height towards the open end of the shell, and tie-engaging formations 140 for purposes which will now be described with reference to Figures 5 and 6.

Figure 5 shows the junction box screwed to a surface 200 (e.g. a wall) by means of a screw 210 passing through a hole in the floor of the body 10. As is usual in practice, the surface 200 is shown upright with the bulkhead end of the junction box and its protruding wires pointing downward. The lid 20 is open and the "Termseal" shell 100 is shown aligned with the body 10 with the wider open ends of the enlargements 130 at the bulkhead end to accommodate the accumulated thickness of the wires approaching the diaphragms 42.

Flexible plastics ties 220 are shown (cut away for clarity) aligned with the engaging formations 140, ready to pull and secure the insert shell 100 containing the gel 110 tightly down over the terminals 52 screws 54 and the wires 60 within the body 10 of the junction box.

Figure 6 shows the insert body 10 tightly secured by the ties 220, thus compressing the gel 110 to cover and seal around the terminals 52, screws 54, and wires 60, as indicated in the cut-away portion 150. The gel is shown bulging slightly at 112 as a result of this compression.

The junction box is shown secured to a post (not to scale) by the alternative means of a belt 300 passing through an eye 310 moulded integrally with the body 10.

The lid 20 may now be closed (having sufficient flexibility to accomodate the thin ties 220), and re-entry and re-wiring may be easily effected on opening the lid 20 and removing the ties 220, since the beneficial properties of the gel protect the screws 54 and enable the gel to separate cleanly from the screws on removal of the "Termseal" insert. After the rewiring, the insert may be re-secured and the lid closed to continue protecting the connections.

In all embodiments of the present invention, it is preferred to use S-Gel compositions incorporating both the first aspect (selected molecular weight) and the second aspect (selected extender oil), or incorporating both the first aspect and the third aspect (selected tackifier), and it is especially preferred to use compositions incorporating all three aspects.

## Claims

1. A gel composition comprising:-
(a) at least 4% by weight of a styrene-alkylene-stryrene block copolymer in which the polystyrene blocks may be unsubstituted or may include on the benzene ring or vinyl moieties substitutents which raise the glass transition temperature of the gel compared with the equivalent gel having unsubstituted polystyrene blocks, the block copolymer having a weight average molecular weight (Mw) within the range from 195000 to 275000, preferably 215000 to 255000, more preferably 225000 to 245000, and
(b) at least 500 parts by weight of extender liquid per 100 parts by weight of the block copolymer, which liquid extends and softens the polyalkylene blocks of the said copolymer,
the composition being substantially free of polystyrene-compatible components which significantly raise or lower the softening temperature of the polystyrene blocks, and having a cone penetration value within the range from 100 to 400, (preferably 100 to 350), ($10^{-1}$ millimetres); an ultimate elongation greater than 100%, with substantially elastic deformation to an elongation of at least 100%; ultimate tensile strength less than 1 MegaPascal; dynamic storage modulus less than 50000 Pascals; and substantially zero slump at temperatures up to 120°C; and the said block copolymer constituting at least 50% of the total polymer.

2. A gel composition according to claim 1, comprising 5 to 15 weight percent, preferably 6 to 10 weight percent, of the said block copolymer.

3. A gel composition according to claim 1 or 2, wherein the said block copolymer comprises 29 to 35 weight percent, preferably 31 to 33 weight percent, of the polystyrene blocks.

4. A gel composition according to any preceding claim, wherein the polystyrene blocks in the said block copolymer have Mw within the range from 30000 to 40000, preferably 33000 to 37000.

5. A gel composition according to any preceding claim, wherein the said block copolymer comprises 71 to 65 weight percent, preferably 69 to 67 weight percent, of the polyalkylene blocks.

6. A gel composition according to any preceding claim, wherein the polyalkylene blocks in the said block copolymer have Mw within the range from 145000 to 165000, preferably 150000 to 160000.

7. A gel composition according to any preceding claim, wherein the polyalkylene blocks in the said block copolymer comprise substantially fully hydrogenated poly(ethylene-butylene) blocks.

8. A gel composition according to claim 7, wherein the poly(ethylene-butylene) blocks comprise units of formula

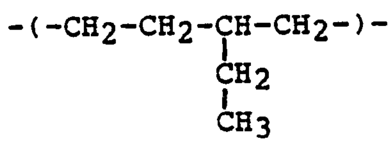

9. A gel composition according to any preceding claim additionally comprising up to 600 parts by weight, preferably 150 to 400 parts by weight, more preferably 200 to 300 parts by weight of a tackifier per 100 parts by weight of the block copolymer.

10. A gel composition according to claim 9, wherein the tackifier is a polyalkene, preferably a poly-(butene isoprene) derived from units of formula $-CH_2-CH=CH-CH_2-$ and units of formula

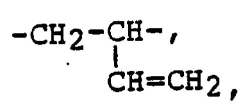

or predominantly comprising units of formula

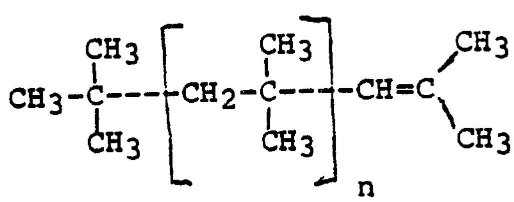

11. A gel composition according to any preceding claim, wherein the extender liquid comprises a

substantially non-aromatic oil, preferably a paraffin/naphthene mineral oil of paraffin:naphthene ratio within the range from 1.75:1 to 5:1, preferably 1.77:1 to 3:1, more preferably 1.9:1 to 2.3:1, and most preferably 2.0:1 to 2.2:1.

12. A gel composition comprising:-

(a) at least 4% by weight of a styrene-alkylene-stryrene block copolymer, and

(b) at least 500 parts by weight of extender liquid per 100 parts by weight of the block copolymer, which liquid extends and softens the polyalkylene blocks of the said copolymer and comprises a substantially non-aromatic paraffin/napthene mineral oil of paraffin: napthene ratio within the range from 1.75:1 to 5:1, preferably 1.77:1 to 3:1, more preferably 1.9:1 to 2.3:1, and most preferably 2.0:1 to 2.2:1,

the composition being substantially free of polystyrene-compatible components which significantly raise or lower the softening temperature of the polystyrene blocks, and having a cone penetration value within the range from 100 to 400, (preferably 100 to 350), ($10^{-1}$ millimetres); an ultimate elongation greater than 100%, with substantially elastic deformation to an elongation of at least 100%; ultimate tensile strength less than 1 MegaPascal; dynamic storage modulus less than 50000 Pascals; and substantially zero slump at temperatures up to 120°C; and said block copolymer constituting at least 50% of the total polymer.

13. A gel composition according to claim 11 or 12 wherein the oil has a refractive index according to ASTM D2140 witihin the range from 1.475 to 1.478, preferably 1.476 to 1.477.

14. A gel composition according to claim 11, 12, or 13 wherein the oil has a specific gravity at 20°C according to ASTM D2140 within the range from 0.863 to 0.870, preferably 0.864 to 0.869.

15. A gel composition comprising:-

(a) at least 4% by weight of a styrene-alkylene-stryrene block copolymer,

(b) at least 500 parts by weight of extender liquid per 100 parts by weight of the block copolymer, which liquid extends and softens the polyalkylene blocks of the said copolymer, and

(c) up to 600 parts by weight, preferably 150 parts to 400 parts by weight, more preferably 200 to 300 parts by weight, per 100 parts by weight of the block copolymer, of a poly(butene-isoprene) tackifier, preferably derived from units of formula $-CH_2-CH=CH-CH_2-$and units of formula

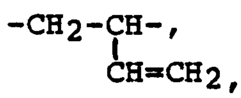

or predominantly comprising units of formula

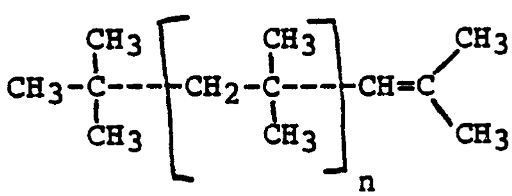

the composition being substantially free of polystyrene-compatible components which significantly raise or lower the softening temperature of the polystyrene blocks, and having a cone penetration value within the range from 100 to 400, (preferably 100 to 350), ($10^{-1}$ millimetres); an ultimate elongation greater than 100%, with substantially elastic deformation to an elongation of at least 100%; ultimate tensile strength less than 1 MegaPascal; dynamic storage modulus less than 50000 Pascals; and substantially zero slump at temperatures upto 120°C; and said block copolymer constituting at least 50% of the total polymer.

16. A gel composition according to claim 9, 10 or 15, wherein the tackifier has a number average molecular weight within the range from 1000 to 2000, preferably 1100 to 1700, more preferably 1200 to 1500.

17. A gel composition according to any of claims 9, 10, 15 or 16, wherein the tackifier has a viscosity at 100°C according to ASTM D445 within the range from 300 to 2000 $mm^2/s$, preferably 350 to 1500 $mm^2/s$, more preferably 400 to 1000 $mm^2/s$, especially 500 to 700 $mm^2/s$.

18. A gel composition according to any of claims 9, 10, or 15 to 17, wherein the tackifier has a density at 15°C according to ASTM D-1298 within the range from 0.893 to 0.899, preferably 0.894 to 0.898.

19. A gel composition according to any of claims 9, 10, or 15 to 18, wherein the tackifier has a refractive index N20/D according to ASTM D-1218 within the range from 1.499 to 1.503, preferably 1.500 to 1.502.

20. A device comprising an enclosure for electrical connections, a body of a gel composition according to any of the preceding claims, and means for holding the body of gel com position in compression against and around the connections so as to protect them from contamination and/or corrosion.

21. A device according to claim 20, wherein the body of the gel composition is held in an insert shell for insertion in the enclosure.

Fig. 1.

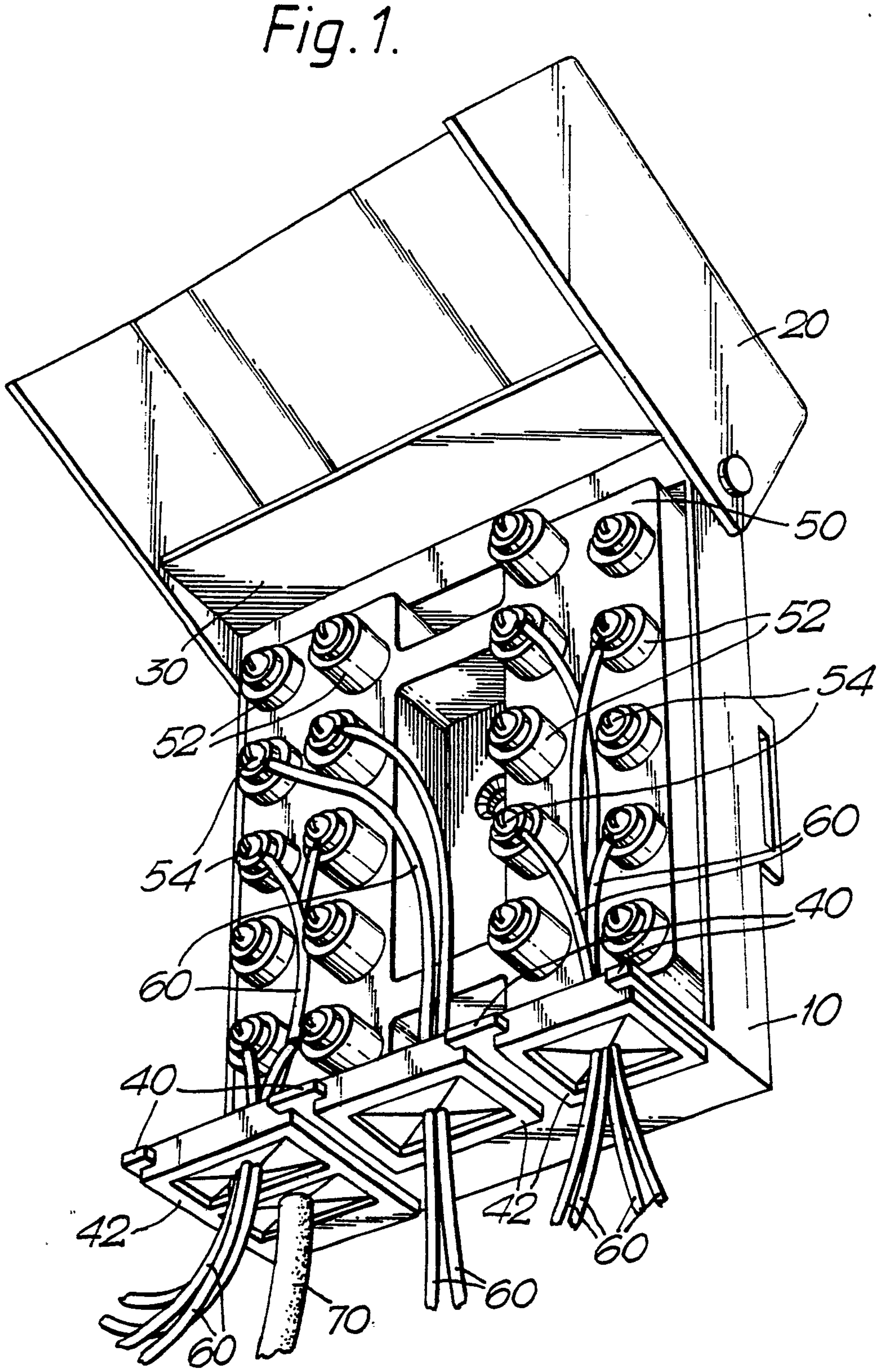

Fig.2.

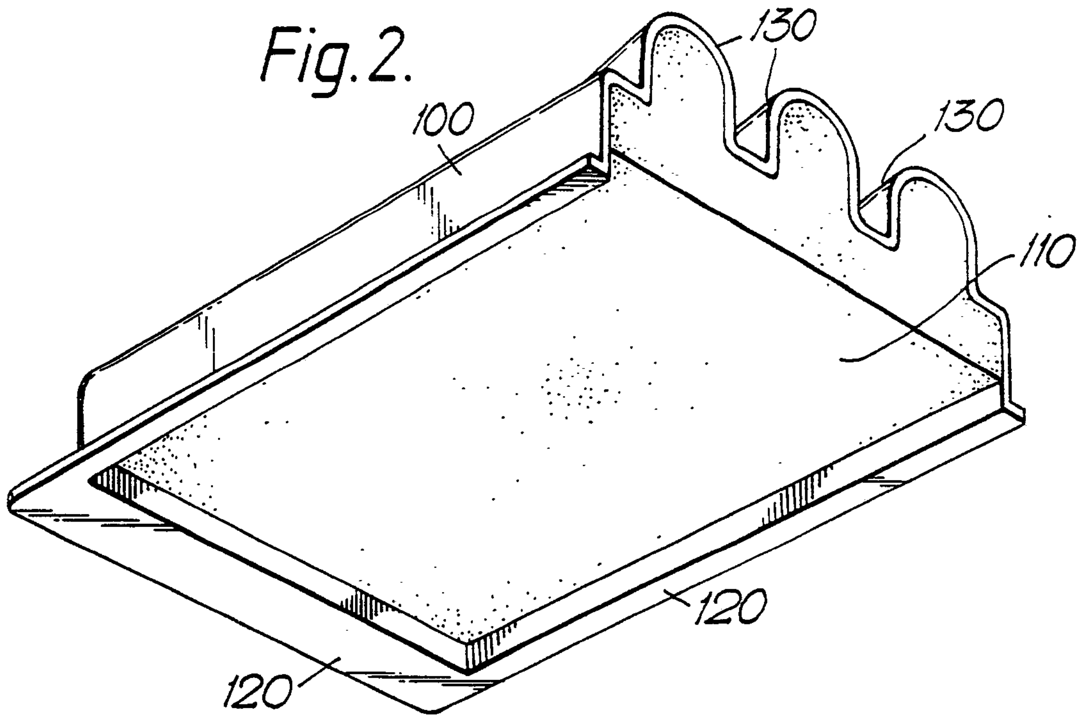


Fig.3.

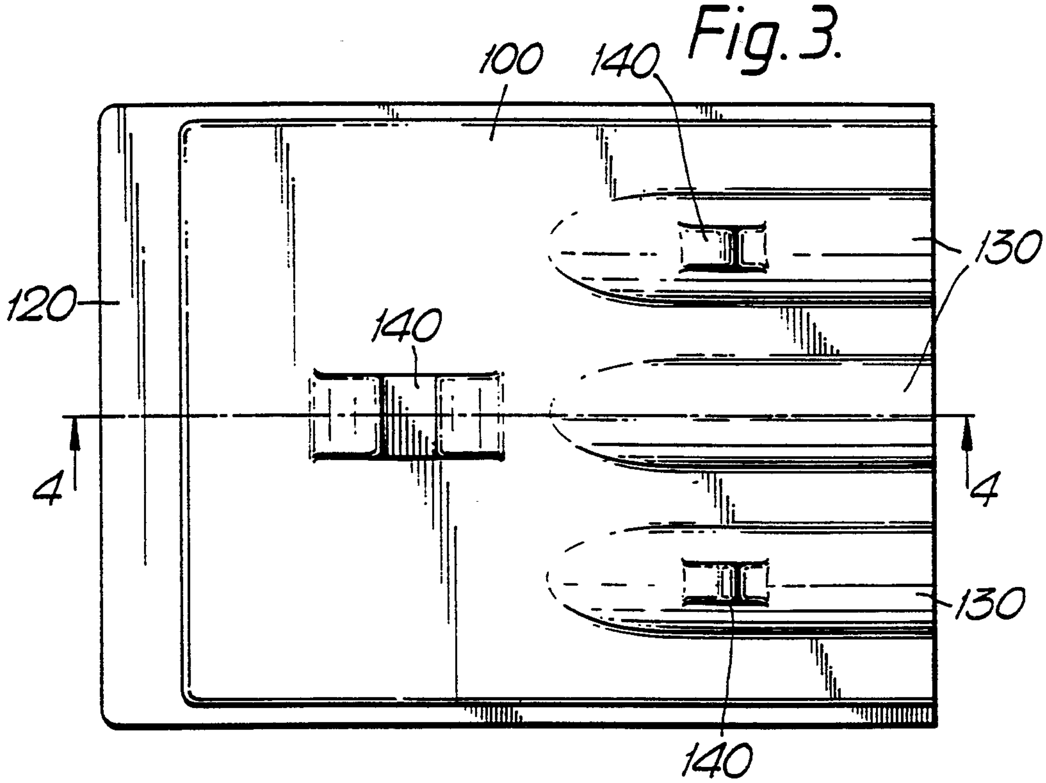


Fig.4.

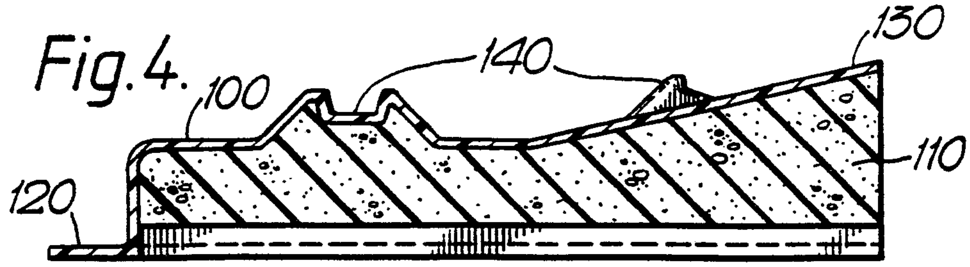

Fig. 5.

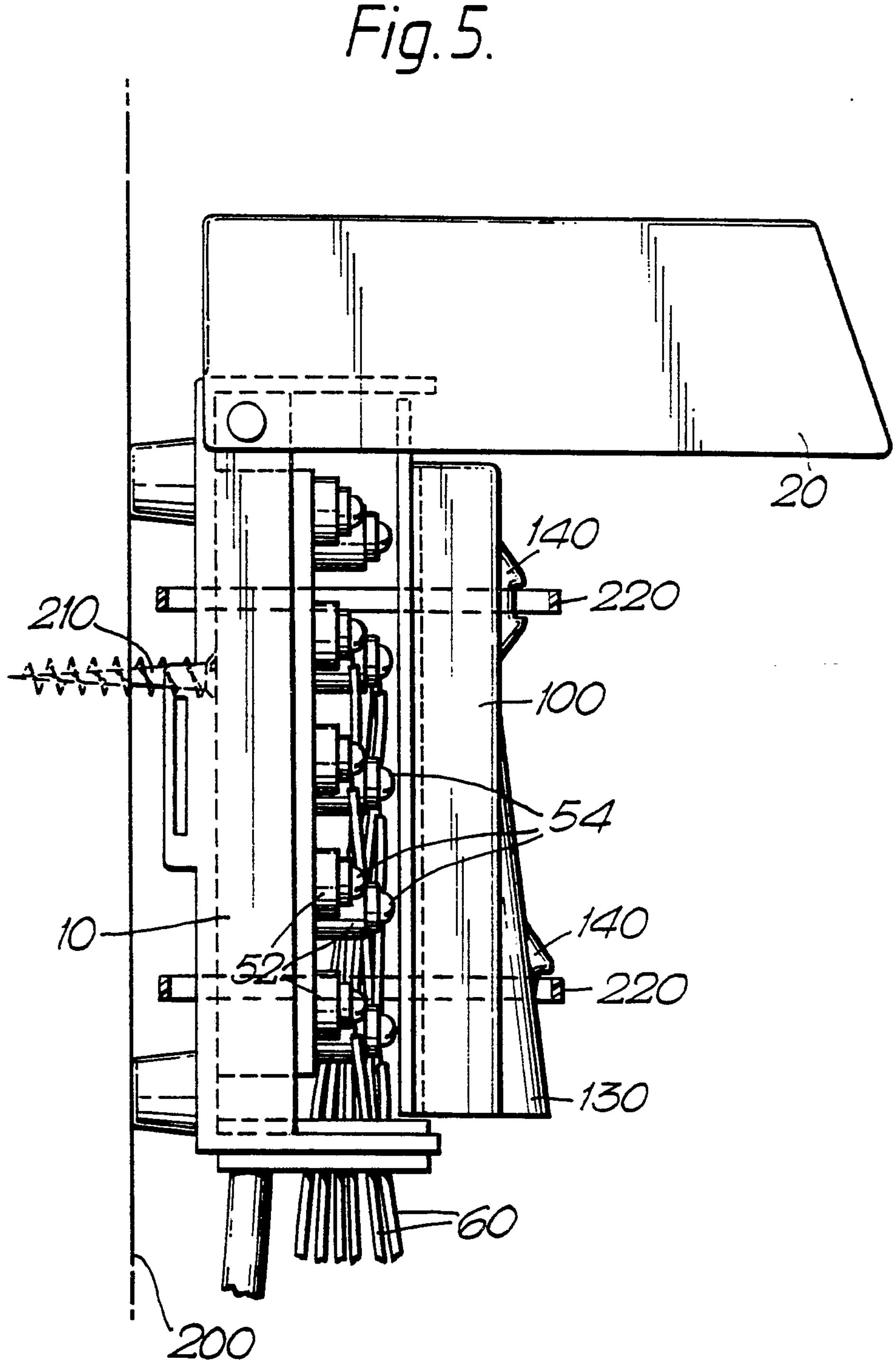

Fig. 6.

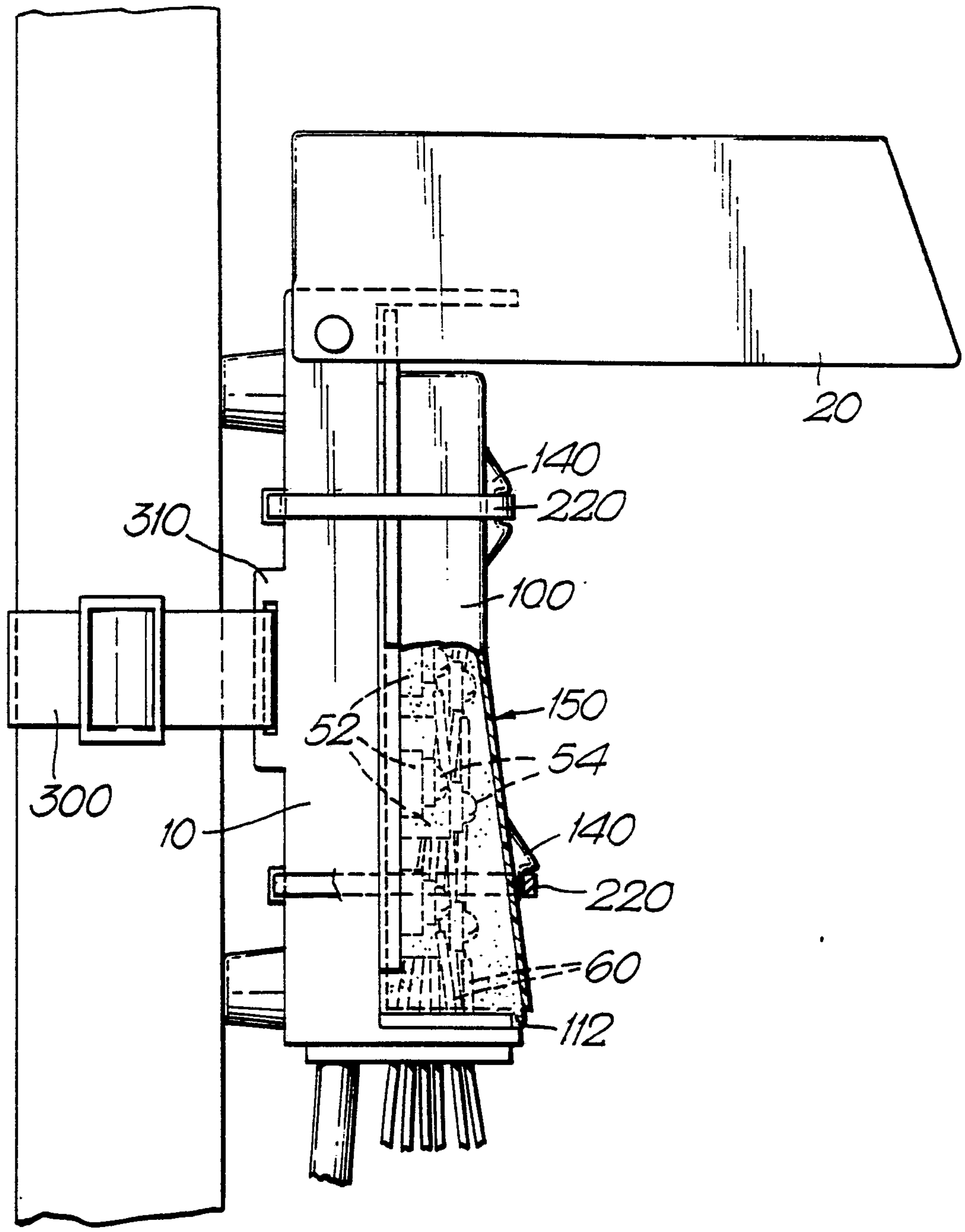

European Patent Office

# EUROPEAN SEARCH REPORT

Application Number

EP 89 31 1630

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 361 507 (BOURLAND) * Claims 1-4 * | 1 | C 08 L 53/00<br>C 08 L 57/02<br>H 02 G 15/18 |
| X | US-A-3 827 999 (SHELL) * The whole document * | 1-8 | |
| D,X | US-A-4 369 284 (CHEN) * Claims 1,2 * | 1 | |
| D,X | WO-A-8 800 603 (RAYCHEM) * The whole document * | 1-21 | |
| A | EP-A-0 056 005 (EXXON) * Claim 1 * | 1 | |
| P,X | EP-A-0 299 718 (RAYCHEM) * The whole document * | 1-21 | |
| | | | TECHNICAL FIELDS SEARCHED (Int. Cl.5) |
| | | | C 08 L<br>C 09 J<br>H 02 G |

The present search report has been drawn up for all claims

| Place of search | Date of completion of the search | Examiner |
|---|---|---|
| THE HAGUE | 23-01-1990 | MEULEMANS R.A.M.G.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document